Europäisches Patentamt

European Patent Office

Office européen des brevets

(19)

(11)    **EP 0 773 412 B1**

(12)        **EUROPEAN PATENT SPECIFICATION**

(45) Date of publication and mention
of the grant of the patent:
**17.12.2003   Bulletin 2003/51**

(51) Int Cl.[7]: **F24F 5/00**, F24F 12/00

(21) Application number: **96307836.5**

(22) Date of filing: **30.10.1996**

(54) **A method and a device for refrigeration of fluid and desiccative refrigeration of gas**

Verfahren und Vorrichtung zum Kühlen eines Fluidstromes und trocknende Gaskühlung

Dispositif et procédé pour le refroidissement d'un fluide et refroidissement déshydratant du gaz

(84) Designated Contracting States:
**AT BE CH DE ES FR GB IT LI NL PT SE**

(30) Priority: **07.11.1995  JP  32348695**
            **21.06.1996  JP  18148496**

(43) Date of publication of application:
**14.05.1997   Bulletin 1997/20**

(73) Proprietors:
• **Kabushiki Kaisha Seibu Giken**
  **Kasuya-gun, Fukuoka-ken (JP)**
• **Kuma, Toshimi**
  **Fukuoka-shi Fukuoka-ken (JP)**

(72) Inventors:
• **Kuma, Toshimi**
  **Fukuoka-shi, Rukuoka-ken (JP)**

• **Kawakami, Yukito**
  **Fukuoka-shi, Rukuoka-ken (JP)**
• **Hirose, Tsutomu**
  **Kumamoto-shi, Kumamoto-ken (JP)**

(74) Representative: **Jacob, Reuben Ellis**
  **Edward Evans Barker**
  **Clifford's Inn,**
  **Fetter Lane**
  **London EC4A 1BZ (GB)**

(56) References cited:
  **DE-A- 4 313 976           GB-A- 2 215 833**
  **US-A- 4 429 735           US-A- 4 713 943**
  **US-A- 4 901 919**

EP 0 773 412 B1

**Description**

The present invention relates to a method and a device for refrigerating fluid by heat exchange between fluids such as between air and air or between liquid and gas, and, as an application of them, to a method and device for desiccative refrigeration of gas such as air.

For refrigerating gas, such as air, or liquid, generally used has been a freezer which performs refrigeration by heat of vaporization of Fleon gas (chlorofluoro hydrocarbons: a trademark of duPont, U.S.A.) liquidized by compressing volatile refrigerant such as Fleon gas using a compressor. In such a freezer, for emitting compression heat of Fleon gas, used is a cooling tower which performs refrigeration by passing Fleon gas in a spiral hose on which water is flowed downward and also by heat of vaporization of the water brought about by flowing air in the counter direction.

It is requested in general air conditioning to obtain air of comfortable temperature and humidity, and it is necessary to lower both temperature and humidity in processing outer air of high temperature and high humidity. As Fleon gas is compressed by a compressor in such air conditioning, energy consumption is large and also destruction of ozone layer in the air by Fleon gas is a serious matter. Large energy is consumed in a cooling tower, too.

A method respectively a device corresponding to the preamble of claim 1 respectively of claim 13 is known from US-A-4 901 919.

The present invention is to provide a method and a device for refrigeration of fluid such as gas, like air, and liquid by using a heat exchanger, and as an application of them, to continuously supply air of comfortable temperature and humidity or gas of low temperature and low humidity by desiccative refrigeration of gas such as air using little energy and without using Fleon gas.

In the present invention, in order to refrigerate high temperature fluid B by sensible heat exchange between low temperature gas A and high temperature fluid B using a cross-flow type heat exchanger or other heat exchangers in which two kinds of fluids of different temperature do not directly contact with each other, the low temperature gas A is put in the saturated condition with volatile liquid vapor such as water vapor, and then in the condition in which a large amount of minute water or other volatile liquid drops are further added to it being uniformly dispersed, i.e., an air flow Aa in the condition in which a large amount of minute liquid drops float in the gas. This is sent into one flow passage of the heat exchanger and the high temperature fluid B is sent into the other flow passage to vaporize the minute liquid drops M in the gas Aa mentioned above by sensible heat of the fluid B via the heat exchanger and to refrigerate the gas Aa by the vaporization heat of the liquid drops, thus refrigerating the fluid B in high efficiency by heat exchange between this cooled gas flow Aa and the fluid B.

Accordingly, the invention provides a method for refrigeration of fluid in which a gas flow A is made into a gas flow Aa which is saturated with a volatile liquid vapor and in which a large amount of misty minute liquid drops M of said volatile liquid float, and in which said gas flow Aa is passed through one flow passage (4) of a heat exchanger (3) having plural flow passages (4, 5) from a position above said heat exchanger (3), and fluid B to be refrigerated is passed through the other flow passage (5) of said heat exchanger (3), so that sensible heat of the fluid B is given to the gas flow Aa while the gas flow Aa passes through one flow passage (4) of the heat exchanger (3) to elevate temperature of the gas flow Aa, so that a large amount of minute liquid drops M floating in the gas flow Aa is vaporized, and the temperature of the gas flow Aa is continuously lowered by the vaporization heat of the liquid drops to continuously refrigerate the fluid B through sensible heat exchange between the gas flow Aa and the fluid B, characterised in that the diameter of each drop of the volatile liquid is not more than 280μm.

Fig. 1 is an explanatory drawing and a partially enlarged drawing of it showing an example of the method and the device for fluid refrigeration of the present invention;

Fig. 2 is a perspective view showing an example of a cross-flow type heat exchanger and a partially enlarged drawing of it;

Fig. 3 is a sectional view showing another example of the method and the device for fluid refrigeration of the present invention;

Fig. 4 is an explanatory drawing of still another example of the method and the device for fluid refrigeration of the present invention;

Fig. 5 is a psychometric chart showing data of fluid refrigeration shown in Fig. 4;

Fig. 6 is an explanatory drawing showing a contrasting example of the method and the device for fluid refrigeration;

Fig. 7 is a psychometric chart showing data of fluid refrigeration shown in Fig. 6;

Fig. 8 is an explanatory drawing showing still another example of the method and the device for fluid refrigeration of the present invention;

Fig. 9 is a psychometric chart showing data of fluid refrigeration shown in Fig. 8;

Fig. 10 is an explanatory drawing showing data of fluid refrigeration of the present invention using aqueous solution of methanol;

Fig. 11 is a psychometric chart showing data of refrigeration using aqueous solution of methanol:

Fig. 12 is an explanatory drawing showing still another example of the method and the device for fluid refrigeration of the present invention;

Fig. 13 is a perspective view of a counter-flow type heat exchanger;

Fig. 14 is a perspective view showing an example of a heat exchanger combining a counter-flow and a cross-flow;

Fig. 15 is a perspective view showing another example of a cross-flow type heat exchanger;

Fig. 16 is an explanatory drawing showing an example of the method and the device for desiccative refrigeration of gas of the present invention;

Fig. 17 is an explanatory drawing showing another example of the method and the device for desiccative refrigeration of gas of the present invention;

Fig. 18 is an explanatory drawing showing still another example of the method and the device for desiccative refrigeration of gas of the present invention;

Fig. 19 is a vertical section of a device for refrigeration of water according to the present invention applied for refrigerator;

Fig. 20 is a perspective view of a device for refrigeration of water shown in Fig. 19, a portion being broken away for the purpose of illustration; and

Fig. 21 is a vertical section of a device for refrigeration of air according to the present invention applied for refrigerator.

Detailed Description of the Preferred Embodiments

In the invention according to Claim 1, volatile liquid mist is added to a gas flow A to its saturation to form a gas flow Aa in which a large amount of misty minute liquid drops M float. Said gas flow Aa is passed through one flow passage of a heat exchanger with multiple flow passages, and fluid B to be refrigerated is passed through the other flow passage of the heat exchanger so that sensible heat of the fluid B is given to the gas flow Aa while the gas flow Aa passes through one flow passage of the heat exchanger, to elevate the temperature of the gas flow Aa. As the saturation ratio of the gas phase part (for example relative humidity in the case that the volatile liquid is water) lowers, a large amount of minute liquid drops M floating in the gas flow Aa are vaporized, and the temperature of the gas flow Aa drops continuously by heat of vaporization of the liquid drops to continuously refrigerate the fluid B. Thus a gas flow Aa, in which a large amount of minute liquid drops M float, is heated by sensible heat exchange to the fluid B in the passage of the heat exchanger and fluid B is refrigerated by vaporization of minute liquid drops M which takes away heat of vaporization and by tempreture lowering of the gas Aa.

Example 1

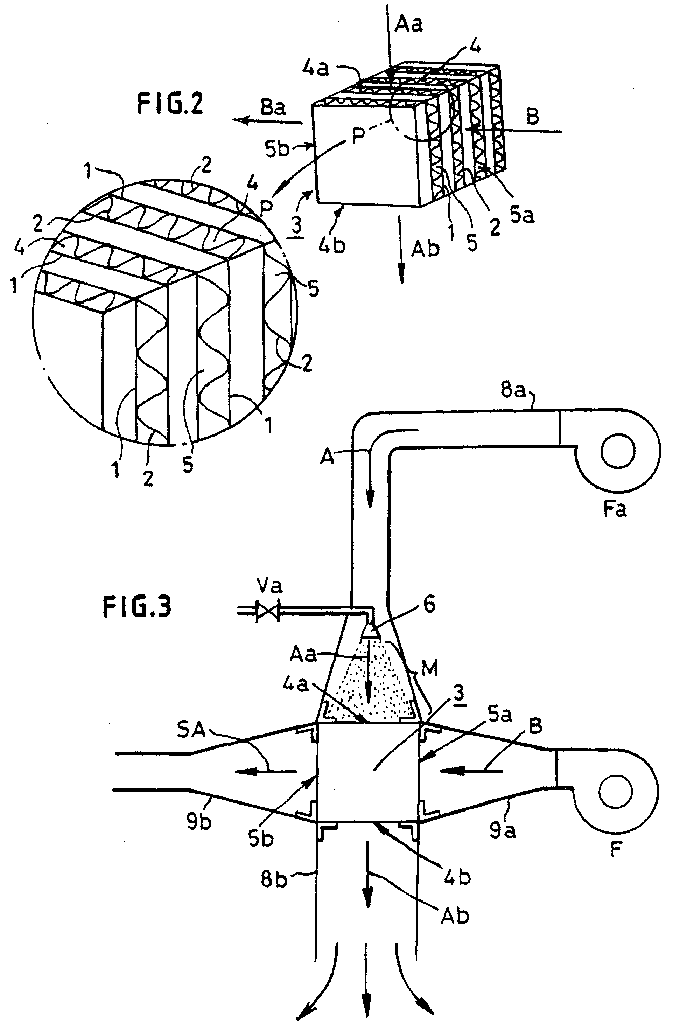

Flat sheets 1 and corrugated sheets 2 of 3.0 mm wave length and 1.6 mm wave height, both consisting of metal sheet such as aluminum or synthetic resin sheet such as polyester, are laminated alternately and in such a manner that the direction of waves of the corrugated sheets 2 crosses rectangularly every step, and adhered to each other to obtain a cross-flow type heat exchanger 3 as shown in Fig. 2. When small concaves and convex are formed by a blast, etc. on the sheet surface, the sheets become hydrophilic and the surface area increases at the same time.

Aluminum sheet can be made hydrophilic by soaking the sheet in aqueous solution of sodium phosphate, sodium hypochlorite, chromic acid, phosphoric acid, oxalic acid or caustic soda or by soaking in boiling water in a short time to produce a hydrophilic substances on the surface of the aluminum sheet.

As a cross-flow type heat exchanger 3, a combination of flat sheets 1 and corrugated sheets 2 was shown as an example. When small waves are formed in the flat sheet part, the surface area is further increased to increase heat exchange efficiency. When the surfaces of the flat sheet 1 and the corrugated sheet 2 are made black, radiation and absorption of radiant heat increase to improve heat exchange efficiency. When the sheet surface is changed to be hydrophilic, it can be prevented to decrease the ventilation of gas in small channels by the pressure drop by the water drop in the case that the fluid B is air or other gas.

As shown in Fig. 2 and Fig. 3, the cross-flow type heat exchanger 3 is set so that one group of small channels 4 are almost vertical and the other group of small channels 5 are almost horizontal. As shown in Fig. 3, a duct 8a and a duct 8b are installed at a flow inlet 4a and at a flow exit 4b of the group of small channels 4, respectively. A duct 8a is equipped with a fan Fa and a water spray 6. A duct 9a and a duct 9b are installed at a flow inlet 5a and a flow outlet 5b of the group of small channels 5 (Fig. 2), respectively. The duct 9a is equipped with a fan F. In the drawing, Va is a valve that regulates spray amount of the water spray 6.

A water spray 6 is preferably possible to distribute uniformly water drops as small as possible such as an air mist nozzle. Water drops are preferably as small as possible such as around 10 μm. When the largest diameter of water drops sprayed by an air mist nozzle is adjusted to around 280 μm, diameters of about 70 % of water drops are smaller than 100 μm and the effect of the present invention is fully displayed.

An air mist nozzle is to spray using water and air, and sprayed water drops become smaller when both water and air are pressurized. The size of sprayed water drops is easily affected by air pressure and it is desirable to give pressure of more than 3 kgf/cm$^2$. A nozzle using liquid only may be adopted.

Now the action of this refrigerating device is explained. As shown in Fig. 3, the water spray 6 mentioned above is used for an outer air or room air flow A to spray to the air flow A a large amount of minute water drops so that temperature drops by heat of vaporization of water drops and relative humidity is increased. It is further made into an air flow Aa in which a large amount of minute water drops M float and the air flow Aa is sent into many flow passage inlets 4a of the heat exchanger 3 by emitting pressure of the fan Fa.

When high temperature air flow B is sent into a flow passage inlet 5a of the heat exchanger 3 by the fan F, on the other hand, the air flow Aa takes sensible heat of the high temperature air flow B through a partition wall 1 (cf. Fig. 2) of the flow passage while the air flow Aa passes through the flow passage of the heat exchanger 3 to elevate temperature of the air flow Aa. As a result, relative humidity of the air flow Aa lowers and a large amount of minute water drops M contained in the air flow Aa vaporize to lower temperature of the air flow Aa by the heat of vaporization of the water drops and to refrigerate the high temperature air flow B through the partition wall 1.

The refrigeration principle of this refrigerating device is explained further in detail. Vapor pressure of liquid is larger in liquid drop condition than in the condition when liquid keeps horizontal surface, and the smaller the liquid drop diameter is, the larger the vapor pressure of liquid is. This phenomenon is expressed as follows as Kelvin's formula

$$\log (p\,r\,/\,p) = 2\,\delta\,M\,/\,\rho\,rRT$$

In this formula, p is vapor pressure on horizontal surface, pr is vapor pressure of liquid drop of radius r, M is mol mass, $\delta$ is surface tension. $\rho$ is liquid density, R is gas constant and T is absolute temperature.

Therefore, the smaller the radius of water drops is, the faster their vaporization is and the stronger the refrigeration effect becomes. Furthermore in the process of vaporizing sprayed water drops M in the heat exchanger 3, the diameter of water drops M becomes smaller. And the smaller the diameter of water drops M becomes, the higher the vapor pressure becomes. Therefore vaporization of water drops M goes on acceleratedly. That is to say, minute water drops M vaporize in the heat exchanger 3 in an extremely short time to take away much heat of vaporization.

According to the formula mentioned above, in case of water of 18°C, vapor pressure increases by 0.1 % compared to that in the condition of water surface being flat when the radius of water drops becomes 1 $\mu$ and by about 10 % when the radius of water drops becomes 10 m $\mu$. Vapor pressure is almost doubled when the radius of water drops is further lowered to 1 m $\mu$. When air in which such a large amount of minute water drops M float is sent into the heat exchanger 3 as mentioned so far, observed is a phenomenon that water drops M vaporize rapidly in the heat exchanger 3.

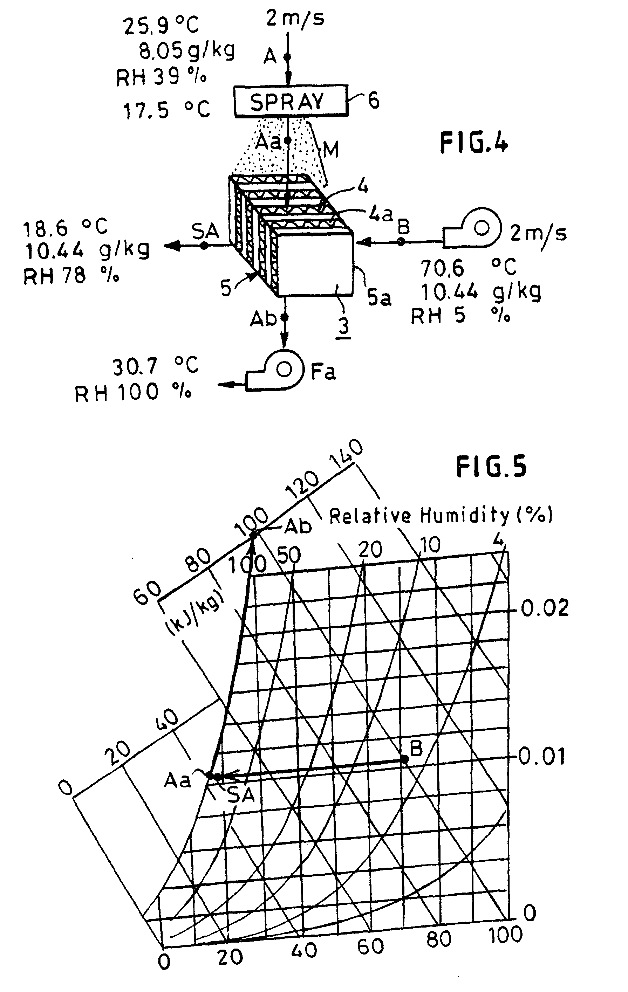

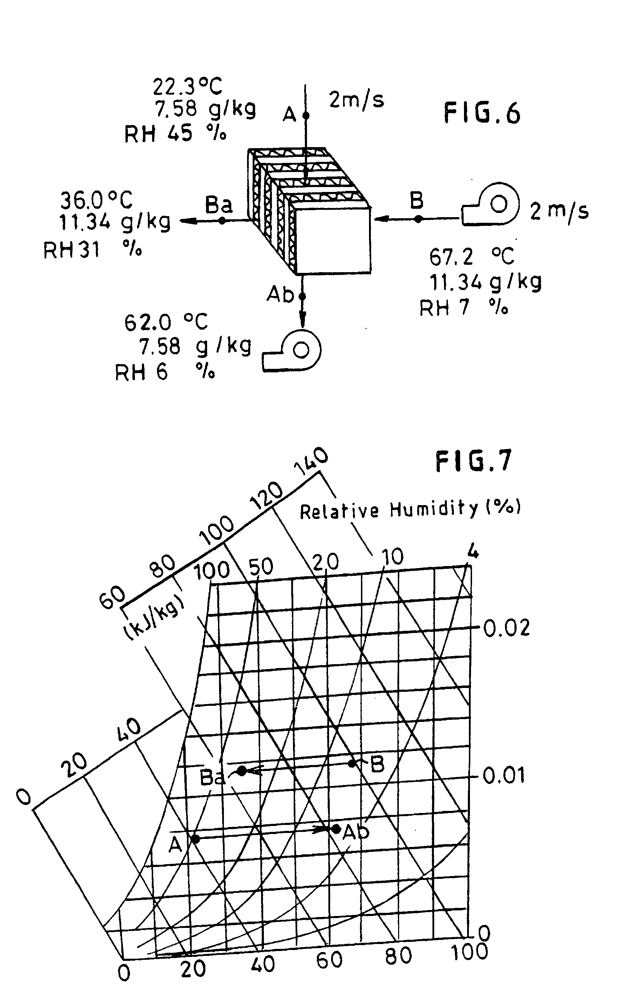

Tests were performed using this refrigerating device. As shown in Fig. 4, an air flow A of temperature 25.9°C, absolute humidity 8.05 g/kg and relative humidity 39 % is passed through a water spray 6 to lower its temperature to 17.5°C and at the same time to make it into an air flow Aa having 100% of relative humidity in which a large amount of minute water drops M float. This air flow Aa is sent into an inlet 4a of small channels 4 arranged almost perpendicularly in the heat exchanger 3 at the air flow speed of 2 m/sec.. On the other hand, a high temperature air flow B of temperature 70.6°C, absolute humidity 10.44 g/kg and relative humidity 5.2 % is sent into a flow inlet 5a of small channels arranged almost horizontally in the heat exchanger 3 at the air flow speed of 2 m/sec. by the blower F. The small channels 4 do not have to be exactly perpendicular: It is good enough if water drops pass through floating in the air. Fig. 5 is psychometric chart showing air refrigeration in this case and Table 1 is the test result.

Table 1

| (with spray) Example 1 ( when the air flow B is of high temperature) | | | |
|---|---|---|---|
| | Temperature ( °C ) | Absolute Humidity (g/kg) | Relative Humidity (%) |
| Air Flow A | 25.9 | 8.05 | 39 |
| Air Flow Aa | 17.5 | - | 100 |
| Air Flow B | 70.6 | 10.44 | 5.2 |
| Supply Air SA | 18.6 | 10.44 | 78 |
| Sensible Heat Exchange Efficiency | $\eta_1 = \dfrac{B - SA}{B - Aa} \times 100 = 97.9\%$ (1) | | |

Sensible heat exchange is performed between the high temperature air flow B and the air flow Aa, and temperature of the air flow Aa is continuously lowered by vaporization of minute water drops floating in the air flow Aa as mentioned above, refrigerating the air flow B to lower its temperature without increasing absolute humidity to make it into comfortable air of temperature 18.6°C, absolute humidity 10.44 g/kg and relative humidity 78 % to be used as supply air SA. The air flow Aa becomes an air flow Ab of temperature 30.7°C and relative humidity 100 % by passing through the heat exchanger 3. This air flow Ab is emitted in the atmosphere.

The sensible heat exchange efficiency $\eta_1$ in this case becomes 97.9 % as shown by the formula (1) in Table 1, which shows that the heat exchange efficiency is very high. In the formula (1), B, SA, Aa show temperature of each air. The amount of water drops sprayed is about 8 - 15 liters per hour. The flow amount of the air flows A and B in this case is about 180 m$^3$/hour. The heat exchanger size is 0.25m $\times$ 0.25m = 0.0625 m$^2$ in area. the surface area of its inlets 4a, 5a are 0.0625 m$^2$, respectively, and channel opening rate is about 40%. Therefore cross sectional area of small channels is 0.0625 m$^2$ $\times$ 40% = 0.025 m$^2$ and, as wind velocity is 2 m/sec., wind volume is 0.025 m$^2$ $\times$ 2 m/sec. = 180 m$^3$/hour.

To compare with this, test data of the case using the same cross-flow type heat exchanger as used in Example 1 and without using a water spray in an air flow for refrigeration is shown in Fig. 6, Table 2 and psychometric chart in Fig. 7.

Table 2

| Contrasting Example ( when the air flow B is of high temperature) | | | |
|---|---|---|---|
| | Temperature ( °C ) | Absolute Humidity (g/kg) | Relative Humidity (%) |
| Air Flow A | 22.3 | 7.58 | 45 |
| Air Flow B | 67.2 | 11.34 | 7 |
| Supply Air Ba | 36.0 | 11.34 | 31 |
| Sensible Heat Exchange Efficiency | $\eta_1 = \dfrac{B - Ba}{B - A} \times 100 = 69.5\%$ (2) | | |

In the formula (2), B, Ba, A show tempetature of each air.

An air flow A of temperature 22.3°C becomes an air flow Ab of temperature 62.0°C by sensible heat exchange, and a high temperature air flow B of temperature 67.2°C becomes an air flow Ba of temperature 36.0°C by sensible heat exchange. Absolute humidity does not change in the air flow A and the air flow B.

The sensible heat exchange efficiency $\eta_1$ in this case is 69.5 % as shown by formula (2) in Table 2. When water is sprayed, the sensible heat exchange efficiency is 97.9 %. When water is not sprayed, it is 69.5 %. Thus spraying water increases the heat exchange efficiency by about 30 %. The other experimental conditions are same as the case of spraying water in Example 1.

Example 2

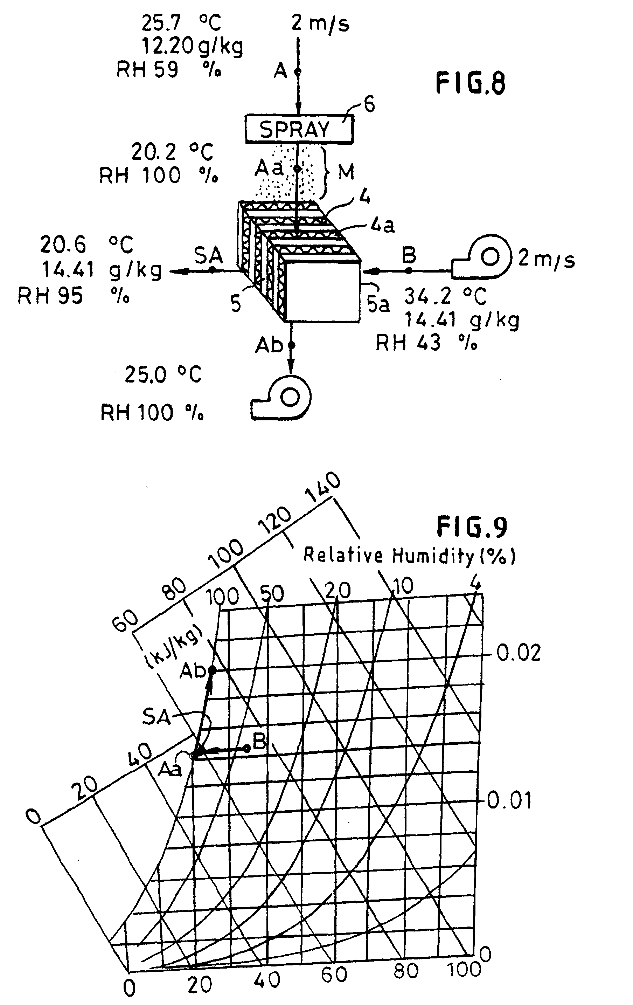

Using this refrigerating device similarly as shown in Fig. 8, air of temperature 25.7°C, absolute humidity 12.20 g/kg and relative humidity 59.0 % is made into an air flow A of wind velocity 2 m/sec.. This is passed through a water spray 6 to obtain an air flow Aa of temperature 20.2°C, relative humidity 100% and in which a large amount of misty minute water drops float uniformly.

This air flow Aa is sent into an inlet 4a of small channels 4 of a heat exchanger. On the other hand, high temperature air to be refrigerated of temperature 34.2 °C, absolute humidity 14.41 g/kg and relative humidity 43 % is made into an air flow B of wind velocity 2 m/sec., which is sent into an inlet 5a of small channels 5 of the heat exchanger. Sensible heat exchange is performed between the high temperature air flow B and the air flow Aa, and the air flow B becomes refrigerated air SA of temperature 20.6°C, absolute humidity 14.41 g/kg and relative humidity 95 %. The air flow Aa becomes an air flow Ab of temperature 25°C and relative humidity about 100 %, which is emitted in the atmosphere. The psychometric chart in this case is shown in Fig. 9 and the test data in Table 3.

Table 3

| (with spray) Example 1 (air flow B is of the normal temperature) | | | |
|---|---|---|---|
| | Temperature ( °C ) | Absolute Humidity (g/kg) | Relative Humidity (%) |
| Air Flow A | 25.7 | 12.20 | 59.0 |

Table 3 (continued)

| (with spray) Example 1 (air flow B is of the normal temperature) | | | |
|---|---|---|---|
| | Temperature ( °C ) | Absolute Humidity (g/kg) | Relative Humidity (%) |
| Air Flow Aa | 20.2 | - | 100 |
| Air Flow B | 34.2 | 14.41 | 43 |
| Supply Air SA | 20.6 | 14.41 | 95 |
| Sensible Heat Exchange Efficiency | $\eta_1 = \dfrac{B - SA}{B - A} \times 100 = 97.1\%$ (3) | | |

As shown in the drawing, heat of vaporization of water drops in the air flow Aa is transmitted to the air flow B via the partition wall to lower temperature of the air flow B without changing absolute humidity, as shown in the psychometric chart, along the horizontal line of the psychometric chart until it reaches the point SA (20.6 °C) and temperature of the air flow Aa rises until it reaches the point Ab along the tine of relative humidity 100 %. Sensible heat exchange efficiency in this case is 97.1 % as shown by formula (3) in Table 3, which is almost same as sensible heat exchange efficiency of Example 1. That is to say, when temperature of the fluid B lowers, temperature of the supply air SA is 20.6 °C, which is appropriate for air conditioning, by decreasing the amount of water sprayed. The amount of water sprayed is about 8 liters/hour.

Example 3

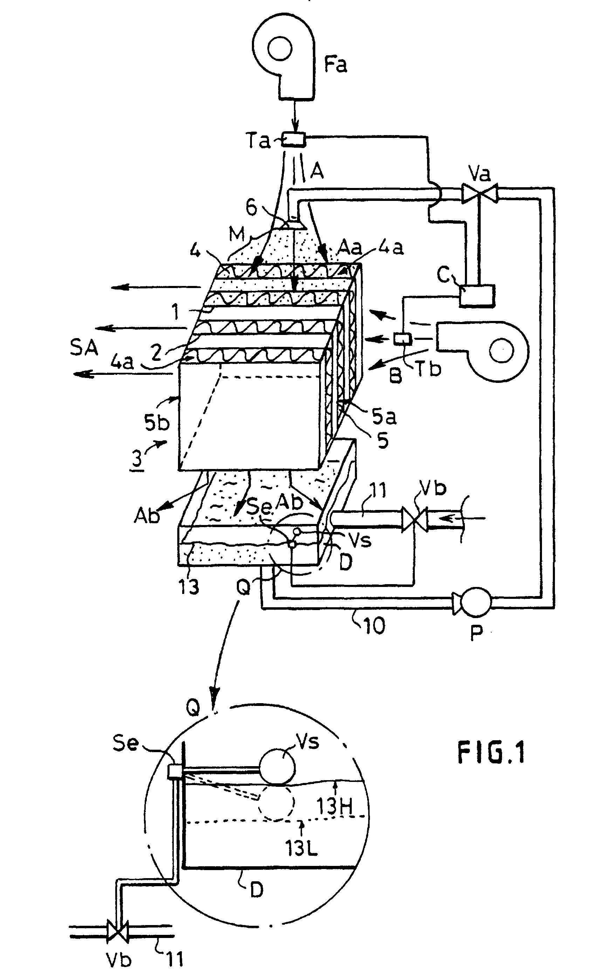

As shown in Fig. 1, added to the device shown in Fig. 3 explained in Example 1 are a water tank D that receives water drops emitted together with an air flow Ab, a recirculation device of water pooled in said tank D, i.e., a pump P, a water leading pipe 10, an electric valve Va and a water level regulating device, i.e., a water level float Vs, a water level sensor Se, an electric valve Vb, a spray amount regulating device of a water drop spraying device 6, i. e., a thermocouple Ta, a thermocouple Tb, an electric signal amplifier C, and an electric valve Va. In the drawing, parts numbered in the same way as in Fig. 3 are not explained as they are the same parts explained in Fig. 3 in Example 1.

Installed is a water leading pipe 10 that recirculates water in a water tank D into a water spray 6, and it is provided with a pump P and an electric valve Va in the middle of it. A water supply pipe 11 is installed to a water tank D. A water level float Vs is floated on the water surface 13 in the water tank D. An on-off electromagnetic valve Vb at the water supply pipe 11 and a water level sensor Se are connected. As shown in the enlarged drawing of the part Q of Fig. 1, change of water level is caught by the water level float Vs and the water level sensor Se. When the water level goes down to 13 L, the electromagnetic valve Vb opens to supply water. When the water level goes up to 13 H, the electromagnetic valve Vb closes to stop water supply.

Arranged are a temperature sensor for gas flow A such as a thermocouple Ta on the upstream side of the water spray 6, another temperature sensor such as a thermocouple Tb in the fluid B. Said thermocouples Ta and Tb are connected with an electric signal amplifier C. Temperature difference between these two thermocouples Ta and Tb is caught and put in the electric signal amplifier C. As the temperature difference increases. the electric valve Va is operated to increase the volume of water sprayed, and as the temperature difference lowers, the volume of water sprayed is lowered. The flow velocity of the air flow Aa is increased by increasing both the volume of water spray and the output of the fan Fa.

In this case, when sprayed amount from the water spray 6 is too much, minute water drops gather on the inner wall of small channels 4 of the heat exchanger 3 and drip down without fully vaporizing. The surface area of the water flow is extremely small compared with that of minute water drops, and there is too little water vaporization with the quantity of heat taken away from a high temperature air flow B to contribute to refrigeration. Therefore temperature of the air flow Aa cannot be fully lowered, which makes full drop of the temperature of the high temperature air flow B impossible. When water is sprayed so that minute water drops M in the air flow Aa are contained uniformly and in a necessary amount, refrigeration efficiency becomes high and water can be saved.

Example 4

Instead of water (boiling point 100 °C) used in the spray 6, used can be volatile organic liquid such as ethanol (boiling point 78.3 °C), methyl acetate (boiling point 56.3 °C) and methanol (boiling point 64.7 °C), or mixed liquids of such volatile organic liquid and water.

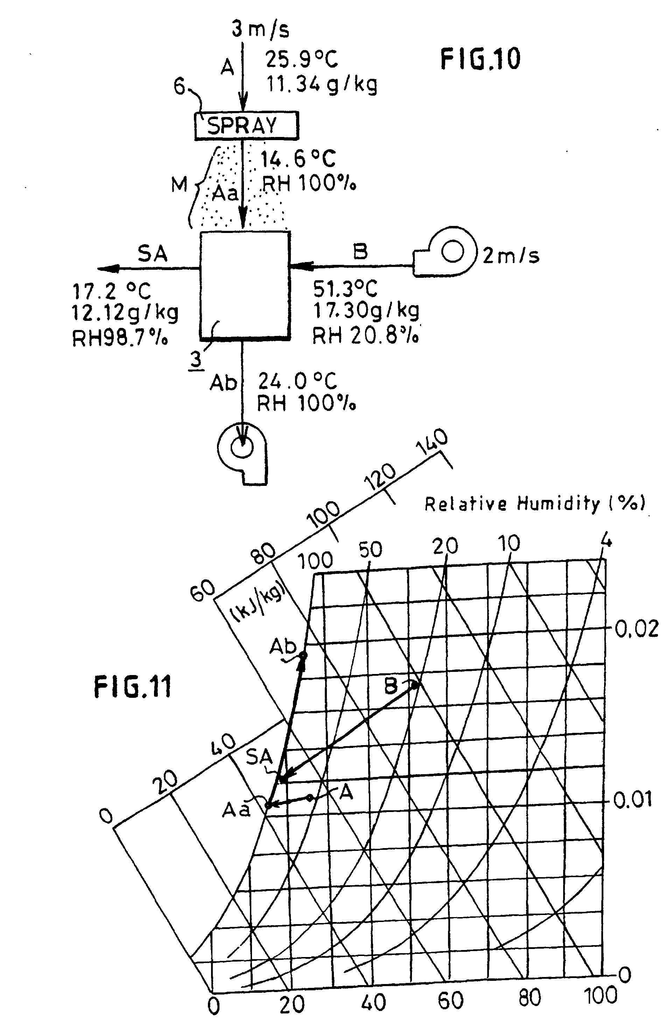

Minute particles of desiccant silica gel are sprinkled on and adhered to both surfaces of a partition wall 1, and a corrugated sheet 2 of wave length 3.4 mm and wave height 1.7 mm (see Fig.2), both consisting of a 25 μ-thick aluminum sheet, both of which are laminated alternately to obtain a cross-flow type heat exchanger 3 of 250 mm × 250 mm × 250 mm in size. A refrigerating device shown in Fig. 10 is constructed using this heat exchanger 3. Fig. 10 also shows data of a case using this device and 45 % aqueous solution of methanol instead of water used for the spray 6 in Examples 1 and 2. In this case, as aqueous solution of methanol is used instead of water, its boiling point goes down and temperature of the air flow A which was 25.9 °C lowered to 14.6 °C after spraying aqueous solution of methanol (air flow Aa).

Low temperature air SA of 17.2 °C was obtained by heat exchange of this air flow Aa of 14.6 °C and a high temperature air flow B of 51.3 °C. Thus in order to obtain air SA of lower temperature, it is better to spray liquid which has low boiling point than spraying water only. Psychometric chart of Fig. 11 is one that shows condition changes of the air flow B → SA and the air flow A → Aa → Ab mentioned above.

Example 5

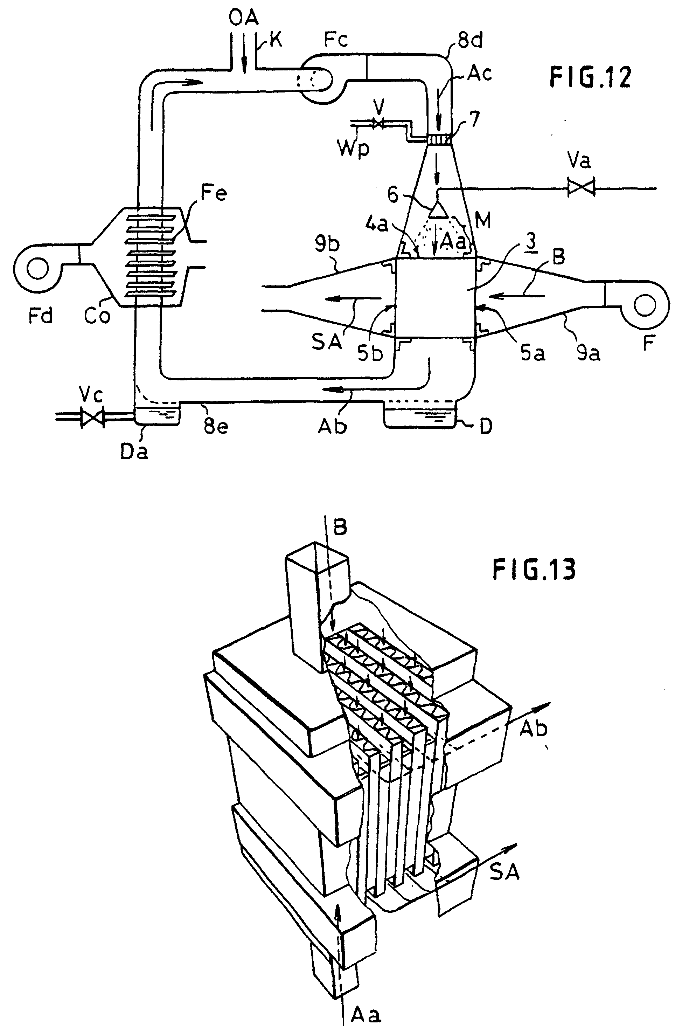

The device of the present example, as shown in Fig. 12, consists of the device explained in Example 1 to which added is a device for recirculating a gas flow Ab exhausted from the outlet 4b of the heat exchanger 3 to a highly humid gas flow Aa and to which a humidifier 7 is provided upstream the water spray 6. In Fig. 12, the outlet 4b of the heat exchanger 3 and the fan Fc are connected by a duct 8e, and the fan Fc and the flow passage of the highly humid gas flow Aa are connected with the duct 8d. A diverging duct K for sending in outer air OA when necessary is connected to a part of the duct 8e.

The humidifier 7 is provided with a valve V in the midway of a water supply pipe Wp so that water can be supplied when humidification is necessary. As a humidifier 7, there are an ultrasonic type and one using multiple woven cloths soaked in water.

A gas flow Aa is passed through the heat exchanger 3, and exhaust gas Ab from the outlet 4b is recirculated by a fan Fc to be used as a gas flow Ac. This gas flow Ac is passed through a humidifier 7 when necessary and is made into the gas flow Aa in which a large amount of minute water drops M float by a spray 6 to be recirculated and sent into the heat exchanger 3.

In Fig. 12, the duct 8e is provided with a refrigerating part Co in the middle of it and many fins Fe are provided on the outer surface of the duct 8e which are covered by a cover. A fan Fd is connected to this. By refrigerating the fin Fe by the fan Fd, fluid Ab in the duct 8e is refrigerated to refrigerate and condense humidity in the highly humid fluid Ab. Condensed water is pooled in the tank Da and water in the tank is drained and sent back to water spray humidifier from time to time by a valve Vc.

The refrigeration method of fluid of the present invention has been so far explained in an example of refrigeration method of air using a cross-flow type heat exchanger. It is a matter of course that the same can be done in refrigeration of gas other than air or liquid such as water.

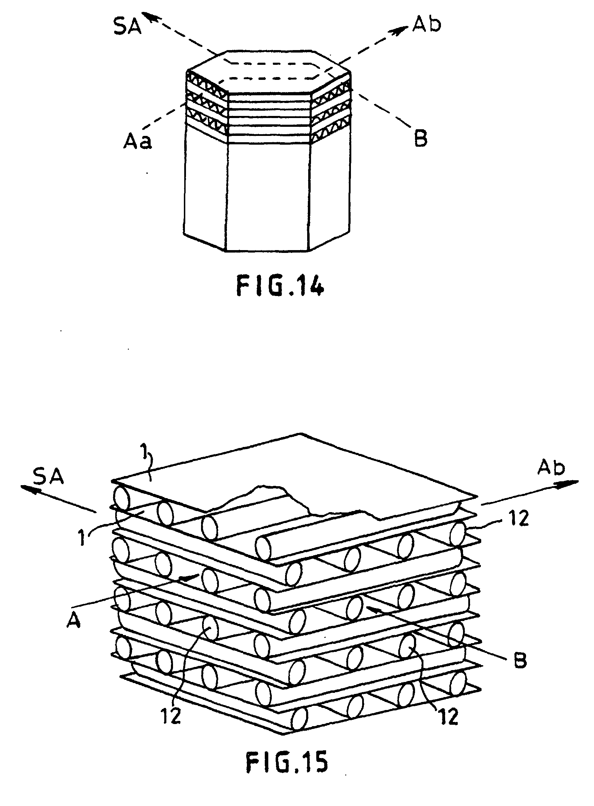

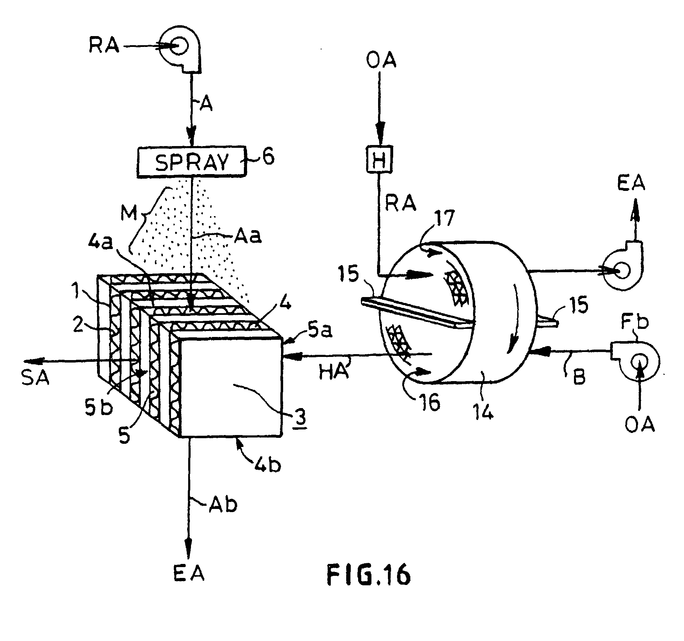

As a heat exchanger, it is also possible to use, instead of the cross-flow type mentioned above, a diagonal cross-flow type, a counter-flow type shown in Fig. 13 or one that is a combination of a counter-flow type and a cross-flow type shown in Fig. 14. In both of the counter-flow type heat exchanger shown in Fig. 13 and one that is a combination of a counter flow and a cross flow shown in Fig. 14, a gas flow Aa in which minute water drops float and fluid B pass through small channels in the direction of arrows in the drawings, and are exhausted as a gas flow Ab and fluid SA, respectively, to perform sensible heat exchange between both fluids of Aa and B. Also used can be a cross-flow type heat exchanger constructed with many spacers 12, 12... between flat plates 1, 1... in such a manner that the direction of a spacer crosses rectangularly every step as shown in Fig. 15, and a heat exchanger which is a counter-flow type or a combination of a counter-flow and a cross-flow like the honeycomb laminate mentioned above.

Example 6

As shown in Fig. 16, a cross-flow type heat exchanger 3 of 250 mm x 250 mm × 250 mm and a spray humidifier 6 are arranged, and a dehumidifier rotor 14 is arranged ahead the heat exchanger 3. The dehumidifier rotor 14 is constructed by forming a honeycomb laminate, to which adsorbent or hygroscopic agent is combined, into a cylindrical shape of 320 mm diameter and 200 mm width. The dehumidifier rotor 14 is divided into an adsorbing zone 16 and a reactivating zone 17 by separators 15, 15'. The rotor is provided with a flowing passage by a duct (not shown in the drawing) as shown by arrows B → HA → SA. The dehumidifier rotor 14 is continuously rotated and operated at 16 r. p.h. in the direction of the arrow in the drawing. Outer air OA of temperature 34.0 °C. absolute humidity 14.4 g/kg and relative humidity 43.1 % is made into an air flow B by a fan Fb, and the air flow B is sent into the adsorbing zone 16 of the dehumidifier rotor 14 at wind velocity 2 m/sec.

Humidity in the air flow B is adsorbed and removed by this dehumidifier to obtain a dry air flow HA. Then the dry air flow HA is sent into the inlet 5a of horizontal small channels 5 of the heat exchanger 3. Outer air OA is heated up to around 80 °C by the heater H and is sent into the reactivating zone 17 of the dehumidifier rotor 14 in the direction of the arrow in the drawing as reactivation air RA. The dehumidifier 14 is dehumidified and reactivated in the reactivating zone 17, and the reactivation air RA is emitted in the air as humid exhaust air EA.

On the other hand, when an air flow A of temperature 26 °C and relative humidity 58 % was humidified by the spray humidifier 6 to have 100 % relative humidity, temperature of the air flow Aa became 17.0 °C. Water is sprayed further to this air flow Aa so that minute water drops numerously float in it. The air flow Aa is sent into the flow inlet 4a of the heat exchanger 3.

The dry air flow HA mentioned above, by passing through the heat exchanger 3, performed sensible heat exchange with the air flow Aa in which minute water drops numerously float, and was refrigerated by heat of vaporization of minute water drops in the air flow Aa in the heat exchanger 3, which is similar to the explanation of Example 1, to obtain comfortable supply air SA of temperature 20.5 °C, absolute humidity 4.5 g/kg and relative humidity 30 %.

As is seen from this example, by dehumidifying outer air of temperature 34 °C, absolute humidity 14.4 g/kg and relative humidity 43.1 % and by passing the obtained dry air, whose temperature has been elevated by heat of adsorption of humidity and whose humidity has lowered, through the heat exchanger 3, refrigerated dry air of temperature 20.5 °C, absolute humidity 4.5 g/kg and relative humidity 30 % can be obtained. In using this air for air conditioning, it can be appropriately humidified to obtain comfortable air conditions.

It is a matter of course that a two-cylindered type dehumidifier which is filled with hygroscopic agent, a cylindrical-type or a Kathabar (trade mark) type dehumidifier provided from Kathabar company, U.S.A. can be used as a dehumidifier besides a rotary-type dehumidifier used in the present example.

Example 7

In the present example. explained is a process of dehumidification by a dehumidifier rotor after refrigeration of high temperature air of 70.0 °C by a heat exchanger.

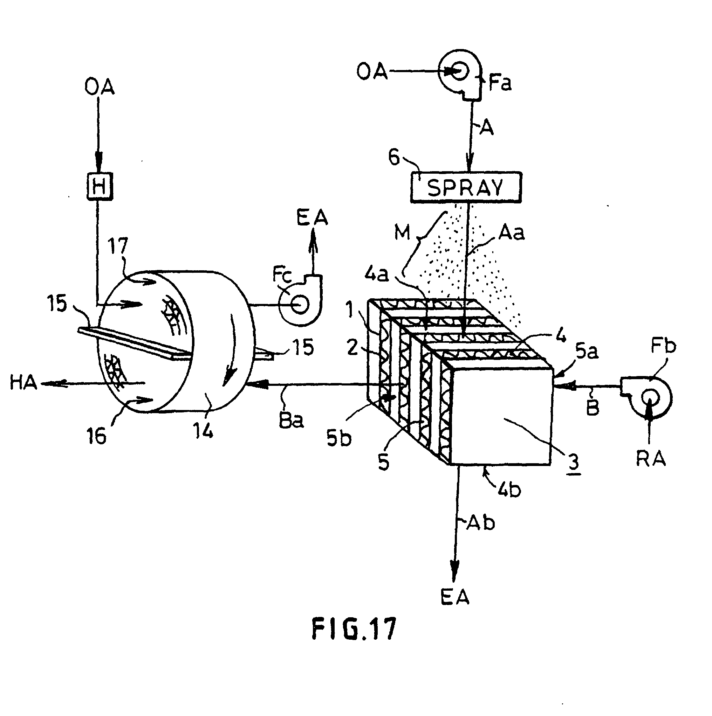

As shown in Fig. 17, a spray humidifier 6 is installed on the upper side of a cross-flow type heat exchanger 3, and a dehumidifier rotor 14 behind the heat exchanger 3. When water is sprayed by a spray humidifier 6 to outer air OA of temperature 26.0 °C, absolute humidity 12.2 g/kg and relative humidity 58 % through a fan Fa till its relative humidity reaches 100 %, temperature of the outer air OA goes down to 17.5 °C. Water is further sprayed to this air and the obtained air flow Aa, in which a large amount of minute water particles float, is passed through one flow passage 4a of the heat exchanger 3.

On the other hand, an air flow B of temperature 70.0 °C, absolute humidity 14.4 g/kg and relative humidity 7 % is sent into an inlet 5a of the heat exchanger 3 by the fan Fb at wind velocity of 2 m/sec.. The air flow B becomes a low temperature air flow Ba by sensible heat exchange in the heat exchanger.

Absolute humidity of the air flow Ba is substantially same as that of the air flow B. The air flow Aa becomes an air flow Ab of temperature 30.0 °C and relative humidity about 100 % at the outlet of the heat exchanger 3 after passing through the heat exchanger and is exhausted in outer air. The dehumidifier rotor 14 is rotated and operated at 16 r.p.h. in the direction of the arrow in the drawing.

The refrigerated air flow Ba mentioned above is sent into the adsorbing zone 16 of this dehumidifier rotor 14 to obtain a dry air flow HA of temperature 55 °C , absolute humidity 4.5 g/kg and relative humidity 5 % by adsorbing/removing humidity. Operation of the dehumidifier rotor 14 is as explained in Example 5. Though dehumidification of high temperature air by adsorption system is extremely difficult, simple and effective dehumidification can be proceeded to obtain refrigerated dry air if a dehumidifier is used after refrigeration by a heat exchanger ahead the dehumidifier as shown in this example.

Example 8

The air flow HA obtained in Example 7 is 55.0 °C in temperature and 5 % in relative humidity. Its temperature is too high and its relative humidity is too low for general air conditioning. Therefore the present example is to pass this air flow HA further through the second heat exchanger 3b to obtain supply air SA of temperature and humidity appropriate for air conditioning.

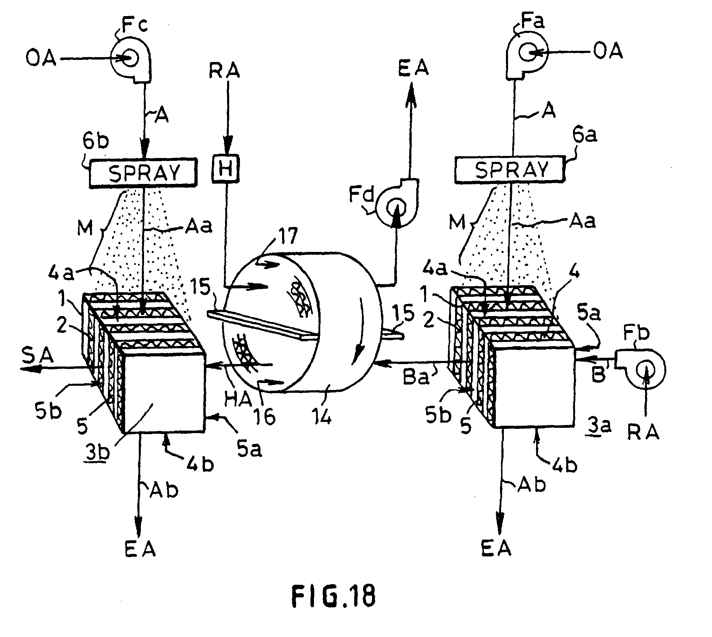

As shown in Fig. 18, a high temperature air flow B is passed through the cross-flow type heat exchanger 3a and the dehumidifier rotor 14 as in Example 7 to obtain an air flow HA. As the operation so far is utterly same as in Example 7, repetition of explanation is omitted. The second cross-flow type heat exchanger 3b is installed behind the dehumidifier rotor 14, i.e., in the flow passage of the air flow HA flowing out of the outlet of process air. A spray humidifier 6b is installed upstream a flow passage 4 of the second heat exchanger 3b as in Example 7 mentioned above. As the effect of this second heat exchanger 3b is same as that of the heat exchanger 3 of Example 7 mentioned above, its explanation is omitted.

On the other hand, a dry air flow HA which has passed through the adsorbing zone 16 of the dehumidifier rotor 14 is sent into a flow passage inlet 5a of small channels 5 horizontally arranged in the heat exchanger 3b. It performs sensible heat exchange with a refrigerated air flow Aa containing a large amount of minute water drops to obtain comfortable supply air SA of temperature 20.5 °C, absolute humidity 4.5 g/kg and relative humidity 30 %. In regulating air conditions of supply air SA, the water amount sprayed to the air flow Aa is controlled to change temperature of supply air SA. When humidity of supply air SA is too low, lowering reactivation temperature of the dehumidifier rotor lowers dehumidifying efficiency of the dehumidifier rotor 14 to increase humidity of the supply air SA to carry out comfortable air conditioning at will.

In Examples 6 - 8 explained above, by spraying to the air flow Aa liquid having low boiling point such as ethanol, methyl acetate and methanol, instead of water used in the spray humidifier, temperature of the supply air flow SA can be further lowered.

Moreover, an ultrasonic mist-forming device can be used as a mist forming means in every example. Besides an air mist nozzle, one fluid nozzle which does not use air can be used as a water spray. In the examples above, relative humidity was made 100 % in one step of a spray humidifier and at the same time a large amount of minute water particles were made to float. It is also possible to install spray humidifiers in plural steps so that humidification is performed in the first step till relative humidity becomes 100 % and a large amount of minute water particles are made to float in the second step. The essential thing is to pass through a heat exchanger air whose relative humidity is 100 % and in which a large amount of minute water particles of around 10 μ in diameter float.

A heat exchanger shown as an example in the above Examples was one that was formed by laminating a corrugated sheet and a flat sheet alternately. The present invention does not restrict a heat exchanger to this: Whatever is good as far as it has plural flow passages whose surface area is large such as a heat pipe provided at both ends with flow passages having many heat exchange fins.

Example 9

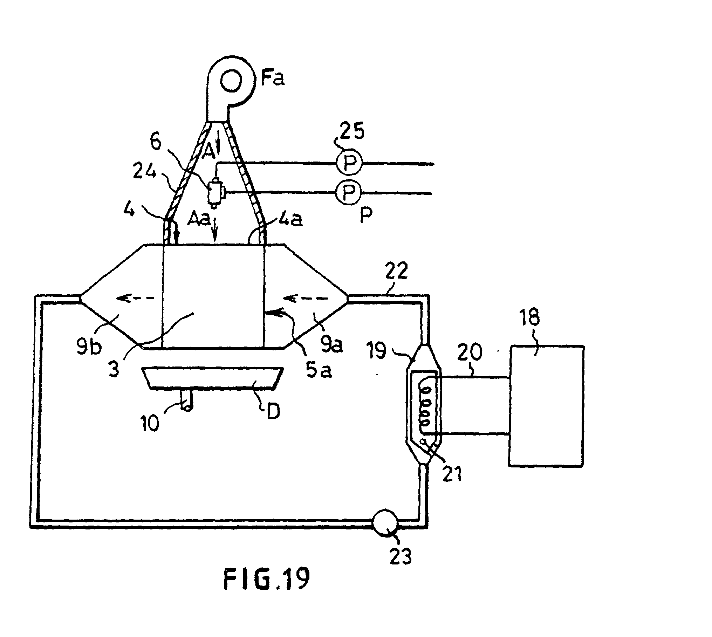

In Fig. 19, 18 is a known freezer containing a compressor (not shown in the drawing) inside, and 19 is a heat exchanger, one flow passage 20 of which is in a spiral state and the other flow passage 21 of which is in a jacket state surrounding the spiral flow passage 20.

Hot Fleon gas or other refrigerants from the compressor flow in one flow passage 20 of the heat exchanger 19 and cooling water flows in the other flow passage 21 of the heat exchanger 19.

Other flow passage 21 of the heat exchanger 19 is connected to one flow passage of a cross-flow type heat exchanger 3 by a pipe 22 to which a circulating pump 23 is installed. That is to say, the heat exchanger 19 and the cross-flow type heat exchanger 3 are set so that cooling water circulates between them in airtight condition. In the drawing, 9a and 9b are chambers.

Fa is a blower whose inhaling side is open to the atmosphere and whose exhausting side is connected to the upper end of a chamber 24. The lower end of the chamber 24 is connected to the other flow passage inlet 4a of the cross-flow type heat exchanger 3. And the other flow passage outlet of the cross-flow type heat exchanger 3 is open to the atmosphere.

A spraying device 6 is installed inside the chamber 24 to make relative humidity of the air in the chamber 24 up to 100 % and, at the same time, to bring about such condition that a large amount of minute water drops float, i.e., misty condition. As a spraying device 6, an air spraying nozzle, for example, is used to which a pressurizing pump P for water and a compressor 25 are connected.

D is a water tank which is installed under the cross-flow type heat exchanger 3 and which is provided with a drain pipe 10.

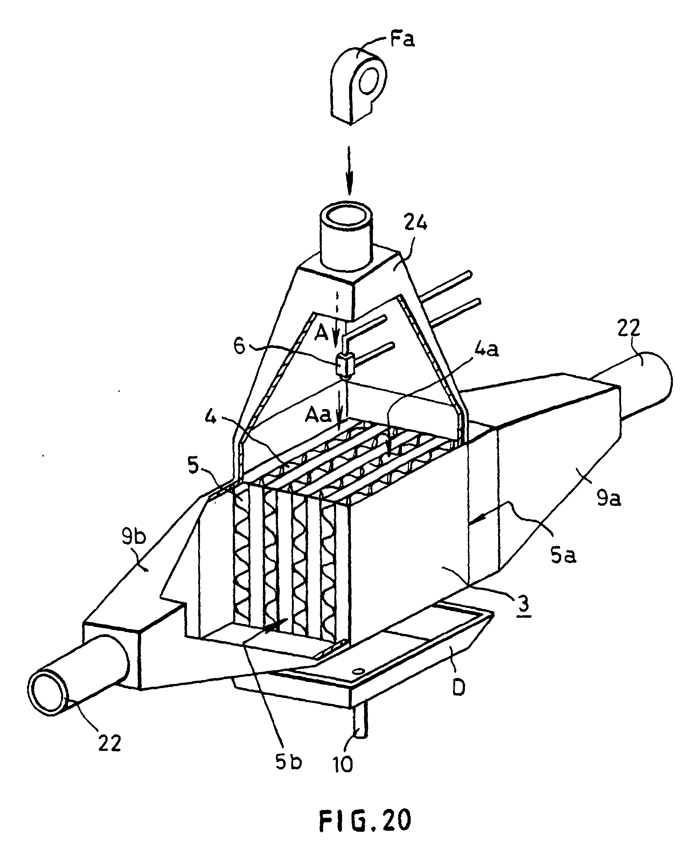

As shown in Fig. 20, this cross-flow type heat exchanger 3 is placed so that the axis of one group of its small channels 4 is almost vertical and that of the other group of its small channels 5 is almost horizontal, and a chamber 24 is installed at a flow inlet 4a of the small channels 4 and is provided with a blower Fa and a water spray 6. Chambers 9a, 9b are installed at a flow inlet 5a and at a flow outlet 5b of the small channels 5, and are connected to a pipe 22.

The action of the structure mentioned above is explained below. Now a refrigerating means using a cross-flow type heat exchanger 3 is explained. A blower Fa is run to produce a gas flow A, to which water drops are sprayed by a water spraying device 6 to get a gas flow Aa. The quantity of water sprayed is to be more than the vaporizing quantity by spraying. Then a part of water drops sprayed vaporize, taking away evaporation heat to lower temperature of the gas flow Aa sent into the chamber 24. At the same time the air in the chamber 24, i.e., the gas flow Aa, comes to have relative humidity of 100 % and comes into condition in which a large amount of minute water particles float in the air, i.e., misty condition.

Then this air, in which a large amount of minute water drops float, goes into one group of the small channels 4 of the cross-flow type heat exchanger 3. When a freezer 18 is in operation, the refrigerant which is sent into one flow passage 20 of the heat exchanger 19 is high in temperature and performs heat exchange with water which is sent into the other flow passage 21 of the heat exchanger 19.

The water sent into the other flow passage 21 of the heat exchanger 19 is circulated by a pump 23 and is sent into the other group of the small channels 5 of the cross-flow type heat exchanger 3 through the pipe 22 and the chamber 9a. Sensible heat exchange is performed between one group of the small channels 4 and the other group of the small channels 5 through a separating wall 1. That is to say, the cooling water that passes through the other group of the small channels 5 is cooled by the gas flow Aa that passes through one group of the small channels 4 and, at the same time, the gas flow Aa that passes through one group of the small channels 4 is heated.

Then relative humidity of the gas flow Aa that passes through one group of the small channels 4 becomes lower than 100 % and a large amount of minute water particles contained in it vaporize, taking away evaporation heat to cool the gas flow Aa.

In such a process, temperature of the gas flow Aa that passes through one group of the small channels 4 is kept almost constant in low degrees. Therefore the cooling water that passes through the other group of the small channels 5 is cooled continuously in full range and in full length of the small channels 5a of the heat exchanger 3, and its temperature is kept almost constant.

In this case, when the sprayed quantity from the water spraying device 6 is too much, minute water drops gather on the separating wall in the small channels 4 of the cross-flow type heat exchanger 3 to cohere, forming huge water drops and water currents which, with much smaller surface areas compared with minute water drops, cannot fully lower temperature of the gas flow Aa by the heat taken from the refrigerant and, therefore, cannot fully lower temperature of the refrigerant. When minute water drops are sprayed so that a little more than the necessary minimum is contained uniformly, cooling efficiency is high and, what is more, water can be saved.

Water drops that did not vaporize in the small channels 4 of the cross-flow type heat exchanger 3 are pooled in the water tank D and are discharged from the drain pipe 10. As mentioned above, water quantity sprayed from the water spraying device 6 is almost same as vaporizing quantity in the small channels 4 of the cross-flow type heat exchanger 3. Therefore water quantity pooled in the water tank D is little and there is no problem if all of it is thrown away. Thus, water sprayed from the water spraying device 6 is used without being circulated with no possibility of algae growing.

In the examples mentioned above, explained were examples using water as liquid to be cooled. It is also considered to add to the water antifreeze agent such as ethylene glycol to about 50 % in volume, taking freezing in winter in consideration or to add an anticorrosive in order to prevent corrosion of the heat exchanger 19 and the cross-flow type heat exchanger 3.

Example 10

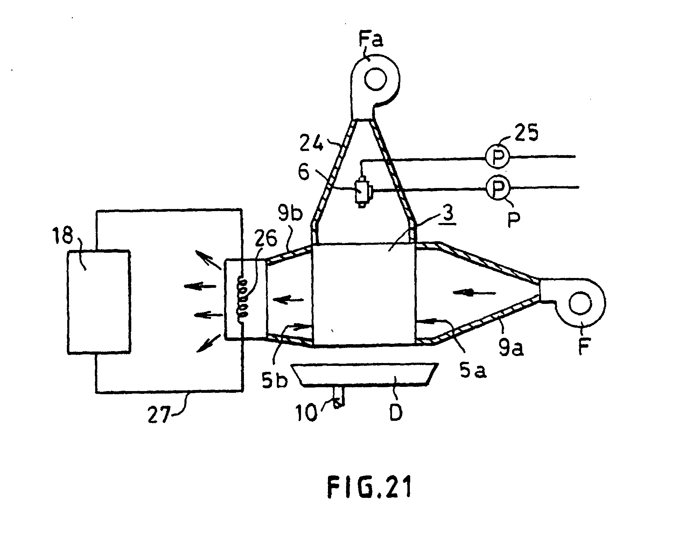

Fig. 21 shows another example of a refrigerating device of a freezer in this example. The difference from the example of Fig. 19 is as follows: In Example 9 shown in Fig. 19, water is passed through the other group of the small channels 5 of the cross-flow type heat exchanger 3; In this example an air flow from a blower F is passed through the other group of the small channels 5 of the cross-flow type heat exchanger 3.

That is to say, F is a blower connected to the inlet of the chamber 9a. The outlet of the chamber 9a is connected to the inlet of the other group of the small channels 5 of the cross-flow type heat exchanger 3. The outlet 5b of the small channels 5 is connected to the inlet of the chamber 9b and the outlet of the chamber 9b is connected to a radiator 26.

A pipe 27 is installed so that refrigerant from the freezer 18 is passed through the radiator 26. As the structure of this example is same as that of Example 9 except the difference mentioned above, its explanation is omitted.

In this example, air passes through the other group of the small channels 5 of the cross-flow type heat exchanger 3 by the blower F, being cooled in the meantime, and reaches the radiator 26. Hot refrigerant from the freezer 18 is sent into the radiator 26 through the pipe 27 to emit heat of the refrigerant. Air that has passed through the small channels 5 is to be sent into this radiator 26.

In other words, the radiator 26 is cooled by the air flow cooled while passing through the other group of the small channels 5 of the cross-flow type heat exchanger 3, and the efficiency is much better than that of direct cooling type by outer air.

In the experiments by the applicants, a cross-flow type heat exchanger 3 same as that of Example 9 shown in Fig. 19 above was used: Air was passed through the small channels 4 of the cross-flow type heat exchanger 3 by the blower Fa at the velocity of 2 m/sec. when outer air temperature was 35 °C and relative humidity was 39 %, and 12 liters/hour of water was sprayed by the spraying device 6. Then temperature of the air that goes from the cross-flow type heat exchanger 3 to the radiator 26 was 18.6 °C and the cooling effect of the refrigerant became extremely high.

In this example, a refrigerating device of a freezer of the present invention can be installed ahead of a radiator of an air conditioning device already installed, and efficiency of a freezer of an air conditioning device already installed and of a refrigerator etc. can be increased through simple and easy work.

Effect of the Invention

The present invention is constructed as explained above, and its principle is to pass as a gas flow for refrigeration a foggy gas flow Aa, having 100% of relative humidity and in which a large amount of minute water drops float uniformly, through one flow passage of a heat exchanger having plural fluid flow passages, and to pass fluid B to be refrigerated such as air or water through the other flow passage, thus contacting the gas flow Aa with minute water drops floating and the fluid B with a partition wall between them to heat the gas flow Aa to lower relative humidity of the gas flow Aa and to evaporate minute water drops, by whose heat of vaporization the gas flow Aa is refrigerated and fluid B is refrigerated too through the partition wall. Its characteristic is that it can regulate refrigeration level of the fluid B by controlling water amount sprayed by the water spray 6. Or by increasing sprayed water amount as temperature difference between the gas flow Aa and the high temperature air flow B grows larger, the fluid Aa increases refrigeration level of the high temperature air flow B in proportion to temperature difference between the fluid Aa and the high temperature air flow B and the air flow B can be refrigerated to an almost constant temperature. Furthermore, dry refrigerated air can be easily obtained by combining this refrigeration device and a dehumidifier.

As explained in Example 1, a cross-flow type heat exchanger 3 was provided with a spray humidifier 6. An air flow Aa with a large amount of minute water drops floating, as an air flow for refrigeration, refrigerated a high temperature air flow B with an extremely high sensible heat exchange efficiency of about 97 %~100%. When the same cross-flow type heat exchanger that was used in Example 1 is used and no spray nor humidifier is used for an air flow for refrigeration, sensible heat exchange efficiency is 63 % as shown as a contrasting example in Example 1. From this it can be seen that heat exchange efficiency in fluid refrigeration of the present invention is extremely high.

The energy consumption necessary for this heat exchange is about 250 W of operating energy of a fan. The heat energy needed for refrigeration of fluid B, on the contrary, is one and a half times to several ten times of the energy consumption, for example, which value increases as temperature of the fluid B elevates.

This refrigeration device for fluid can be used for refrigeration of gas and also for desiccative refrigeration of gas by adding a dehumidifier as shown in Examples 6 - 8, thus for an air-conditioning apparatus. As the operation cost in this case is extremely low as mentioned above, it is not necessary to use room air in recirculation repeatedly for desiccative cooling in a closed room: Desiccative air-cooling can be continued, taking in fresh outer air continuously. Therefore increase of injurious gas such as carbon dioxide in room air can be completely prevented to provide comfortable space.

Furthermore, there is no environmental problem raised as Freon gas is not used like in prior air-cooling, and it has an excellent effect from a hygienic point of view as there is no need to use a compressor and hot air by waste heat might not generate bacteria or mold.

**Claims**

1.    A method for refrigeration of fluid in which a gas flow A is made into a gas flow Aa which is saturated with a volatile liquid vapor and in which a large amount of misty minute liquid drops M of said volatile liquid float, and in which said gas flow Aa is passed through one flow passage (4) of a heat exchanger (3) having plural flow passages (4, 5) from a position above said heat exchanger (3), and fluid B to be refrigerated is passed through the other flow passage (5) of said heat exchanger (3), so that sensible heat of the fluid B is given to the gas flow Aa while the gas flow Aa passes through one flow passage (4) of the heat exchanger (3) to elevate temperature of the gas flow Aa, so that a large amount of minute liquid drops M floating in the gas flow Aa is vaporized, and the temperature of the gas flow Aa is continuously lowered by the vaporization heat of the liquid drops to continuously refrigerate the fluid B through sensible heat exchange between the gas flow Aa and the fluid B, **characterised in that** the diameter of each drop of the volatile liquid is not more than 280µm.

2.    A method for refrigeration of fluid according to Claim 1 in which the amount of minute liquid drops M floating in the gas flow Aa is changed corresponding to the change of temperature difference between the gas flow Aa and fluid B.

3.    A method for refrigeration of fluid according to Claim 1, in which the flow velocity of the gas flow Aa, in which minute liquid drops M float, is changed corresponding to the change of temperature difference between the gas flow Aa and fluid B.

4.    A method for refrigeration of fluid according to any of Claims 1 - 3 in which the gas flow A is made into a gas flow saturated with volatile liquid vapor and volatile liquid mist is further added to said gas flow to make it into the gas flow Aa in which a large amount of minute liquid drops M float.

**5.** A method for refrigeration of fluid according to any of Claims 1 - 4 in which a gas flow Ab containing large amount of volatile liquid vapor exhausted from the outlet (4b) of one flow passage (4) of the heat exchanger (3) is returned to the inlet (4a) side of the same flow passage of the heat exchanger and mist of a volatile liquid is added to said gas flow to make said gas flow into the gas flow Aa in which minute liquid drops M float, to be used in circulation.

**6.** A method for refrigeration of fluid according to any of Claims 1 - 5 in which volatile liquid is water, volatile organic liquid or mixed liquids of volatile organic liquid and water.

**7.** A method for refrigeration of fluid according to any of Claims 1 - 6 in which volatile liquid is sprayed by a gas/liquid mixing type nozzle (6).

**8.** A method for refrigeration of fluid according to any of Claims 1 - 7, in which fluid B is a gas.

**9.** A method for refrigeration of fluid according to any of Claims 1 - 8, wherein fluid B is dehumidified by a dehumidifying means (14) before or after being passed through said heat exchanger (3).

**10.** A method for refrigeration of fluid according to Claim 9, in which fluid B is a gas, and there are two gas flows Aa, and in which one of gas flows Aa is sent into one flow passage (4) of each of the two heat exchangers (3a, 3b) and gas flow B is passed in order through the other flow passage (5) of the first heat exchanger (3a), the dehumidifying means (14) and the other flow passage (5) of the second heat exchanger (3b).

**11.** A method for refrigeration of fluid according to Claim 9 or Claim 10, in which the dehumidifying means (14) is a rotary dehumidifier.

**12.** A method for refrigeration of fluid according to any of Claims 9 -11, wherein the dehumidifying means is a dessicant dehumidifier.

**13.** A device for refrigeration of fluid comprising a mist-forming means (6) for adding volatile liquid to a gas flow A to make it into a gas flow Aa which is saturated with volatile liquid vapor and in which a large amount of misty minute drops M of said volatile liquid float and a heat exchanger (3) having plural flow passages (4, 5), gas flow Aa being passed from a position above said heat exchanger (3), through one flow passage (4) and fluid B to be refrigerated being passed though the other flow passage (5), so that the gas flow Aa takes away sensible heat of the fluid B while the gas flow Aa passes through one flow passage (4) of the heat exchanger so that a large amount of minute liquid drops M floating in the gas flow Aa is vaporized, and the temperature of the gas flow Aa declines continuously by the heat of vaporization to continuously refrigerate the fluid B, **characterised in that** the diameter of each drop of the volatile liquid is not more than 280μm.

**14.** A device for refrigeration of fluid according to Claim 13, in which a means (7) of introducing volatile liquid vapor is provided upstream a mist-forming means (6) for volatile liquid.

**15.** A device for refrigeration of fluid according to Claim 13, in which provided are a duct (8d, 8e) and a fan (Fc) that lead a gas flow Ab exhausted from one outlet (4b) of a heat exchanger (3) to the inlet side (4a) of the heat exchanger (3) to circulate a gas flow Aa for refrigeration.

**16.** A device for refrigeration of fluid according to any of Claims 13 - 15 in which a heat exchanger (3) is of either one of a cross-flow type, a diagonal cross-flow type, a counter-flow type or a counter-flow/cross-flow combined type, consisting of a honeycomb laminate formed by laminating flat sheets and corrugated sheets alternately.

**17.** A device for refrigeration of fluid according to any of Claims 13 - 15 in which a heat exchanger (3) is of either one of a cross-flow type, a diagonal cross-flow type, a counter-flow type or a counter-flow/cross-flow combined type formed by laminating sheets with many spacers between them.

**18.** A device for refrigeration of fluid according to any of Claims 13 - 17 in which the surface of the heat exchange element (1, 2) is hydrophillic.

**19.** A device for refrigeration of fluid according to Claim 16 or Claim 17 in which minute particles are rigidly adhered onto the wall surface of a flow passage (4, 5) of a heat exchanger (3).

**EP 0 773 412 B1**.

20. A device for refrigeration of fluid according to Claim 19 in which minute particles are of adsorbent.

21. A device for refrigeration of fluid according to any of Claims 13 - 15 in which the device further comprises a desiccant dehumidifier (14) for dehumidifying fluid B before or after said fluid is passed through said heat exchanger (3).

22. A device for refrigeration of fluid according to Claim 21, in which the dehumidifying means (14) is provided in the upstream side of the high temperature gas flow B in the heat exchanger (3).

23. A device for refrigeration of fluid according to Claim 21 in which the dehumidifying means (14) is provided in the downstream side of the high temperature gas flow B in the heat exchanger (3).

24. A device for refrigeration of fluid according to Claim 21, in which fluid B is a gas, and there are two gas flows Aa, and in which there are two heat exchangers (3a, 3b) having plural flow passages (4, 5), one of gas flow Aa being passed through one flow passage (4) of each of the two heat exchangers (3a, 3b) and gas flow B being passed in order through the other flow passage (5) of the first heat exchanger (3a), the dehumidifying means (14) and the other flow passage (5) of the second heat exchanger (3b).

25. A device for refrigeration of fluid according to any of Claims 21 - 24 in which the dehumidifying means (14) is a rotary dehumidifier.

26. A device for refrigeration of fluid according to Claim 25, wherein the dehumidifying means is a dessicant dehumidifier.

27. A device for refrigeration of fluid according to Claim 13, comprising a heat exchanger (19) having associated therewith an exhaust heat source (20) of a freezer (18), fluid B once refrigerated being passed into heat exchanger (19) to heat exchange with said exhaust heat source (20).

28. A device for refrigeration of fluid according to Claim 27, in which fluid B is selected from the group consisting of water and a liquid mixture containing water.

29. A device for refrigeration of fluid according to any of Claims 13 - 28, in which the fluid B is a gas.


**Patentansprüche**

1. Verfahren zum Kühlen eines Fluids, demnach ein Gasstrom A in einen Gasstrom Aa überführt wird, der mit flüchtigem Flüssigkeitsdampf gesättigt ist, und bei dem eine große Menge nebeliger winziger flüssiger Tropfen M der flüchtigen Flüssigkeit aufschwimmen, und bei dem der Gasstrom Aa durch einen Strömungsdurchlass (4) eines Wärmetauschers (3) geleitet wird, der mehrere Strömungsdurchlässe (4, 5) aufweist, ausgehend von einer Position über dem Wärmetauscher (3), und bei dem zum Kühlen des Fluids B durch den anderen Strömungsdurchlass (5) des Wärmetauschers (3) geleitet wird, so dass merkliche Wärme des Fluids B auf den Gasstrom Aa übertragen wird, während der Gasstrom Aa einen Strömungsdurchlass (4) des Wärmetauschers (3) durchsetzt, um die Temperatur des Gasstroms Aa zu erhöhen, so dass eine große Menge winziger Flüssigkeitstropfen M, die in den Gasstrom Aa aufschwimmen, verdampft wird, und die Temperatur des Gasstroms Aa durch die Verdampfungswärme der Flüssigkeitstropfen kontinuierlich abgesenkt wird, um das Fluid B durch merklichen Wärmetausch zwischen dem Gasstrom Aa und dem Fluid B kontinuierlich abzukühlen, **dadurch gekennzeichnet, dass** der Durchmesser jedes Tropfens der flüchtigen Flüssigkeit nicht größer als 280 µm ist.

2. Verfahren zum Kühlen eines Fluids nach Anspruch 1, bei dem die Menge an winzigen Flüssigkeitstropfen M, die in dem Gasstrom Aa aufschwimmen, entsprechend der Änderung der Temperaturdifferenz zwischen dem Gasstrom Aa und dem Fluid B geändert wird.

3. Verfahren zum Kühlen eines Fluids nach Anspruch 1, bei dem die Strömungsgeschwindigkeit des Gasstroms Aa, in welchem winzige Flüssigkeitstropfen M aufschwimmen, entsprechend der Änderung der Temperaturdifferenz zwischen dem Gasstrom Aa und dem Fluid B geändert wird.

4. Verfahren zum Kühlen eines Fluids nach einem der Ansprüche 1 bis 3, bei dem der Gasstrom A in einen Gasstrom überführt wird, der durch flüchtigen Flüssigkeitsdampf gesättigt ist, und dass flüchtiger Flüssigkeitsnebel außerdem dem Gasstrom zugesetzt wird, um ihn in den Gasstrom Aa zu überführen, in welchem eine große Menge an winzigen Flüssigkeitstropfen M aufschwimmen.

5. Verfahren zum Kühlen eines Fluids nach einem der Ansprüche 1 bis 4, bei dem ein Gasstrom Aa, der eine große Menge an flüssigem Flüssigkeitsdampf enthält, der aus dem Auslass (4b) eines Strömungsdurchlasses (4) des Wärmetauschers (3) ausgetragen wird, zur Seite des Einlasses (4a) dieses Strömungsdurchlasses des Wärmetauschers rückgeführt wird, und dass ein Nebel aus einer flüchtigen Flüssigkeit dem Gasstrom zugesetzt wird, um den Gasstrom in einen Gasstrom Aa zu überführen, in welchem winzige Flüssigkeitstropfen M aufschwimmen, um bei der Umwälzung genutzt zu werden.

6. Verfahren zum Kühlen eines Fluids nach einem der Ansprüche 1 bis 5, bei dem die flüchtige Flüssigkeit Wasser, die flüchtige organische Flüssigkeit oder ein Flüssigkeitsgemisch aus flüchtiger organischer Flüssigkeit und Wasser ist.

7. Verfahren zum Kühlen eines Fluids nach einem der Ansprüche 1 bis 6, bei dem die flüchtige Flüssigkeit durch eine Gas-/Flüssigkeitsmischdüse (6) versprüht wird.

8. Verfahren zum Kühlen eines Fluids nach einem der Ansprüche 1 bis 7, bei dem es sich bei dem Fluid B um ein Gas handelt.

9. Verfahren zum Kühlen eines Fluids nach einem der Ansprüche 1 bis 8, bei dem das Fluid B durch eine Entfeuchtungseinrichtung (14) entfeuchtet wird, bevor oder nachdem sie durch den Wärmetauscher (3) geleitet wird.

10. Verfahren zum Kühlen eines Fluids nach Anspruch 9, bei dem das Fluid B ein Gas ist, und wobei zwei Gasströme Aa vorgesehen sind, und bei dem einer der Gasströme Aa in einem Strömungsdurchlass (4) von jedem der zwei Wärmetauscher (3a, 3b) geleitet wird, und der Gasstrom B der Reihe nach durch den anderen Strömungsdurchlass (5) des ersten Wärmetauschers (3a), die Entfeuchtungseinrichtung (14) und den anderen Strömungsdurchlass (5) des zweiten Wärmetauschers (3b) geleitet wird.

11. Verfahren zum Kühlen eines Fluids nach Anspruch 9 oder 10, bei dem die Entfeuchtungseinrichtung (14) ein Rotationsentfeuchter ist.

12. Verfahren zum Kühlen eines Fluids nach einem der Ansprüche 9 bis 11, bei dem die Entfeuchtungseinrichtung ein Trockenmittelentfeuchter ist.

13. Vorrichtung zum Kühlen eines Fluids, aufweisend eine Nebelbildungseinrichtung (6) zum Zusetzen einer flüchtigen Flüssigkeit zu einem Gasstrom A, um diesen in einen Gasstrom Aa zu überführen, der mit flüchtigem Flüssigkeitsdampf gesättigt ist, und in dem eine größere Menge an nebeligen winzigen Tropfen M der flüchtigen Flüssigkeit aufschwimmen, und einen Wärmetauscher (3) mit mehreren Strömungsdurchlässen (4, 5), wobei der Gasstrom Aa aus einer Position über dem Wärmetauscher (3) durch einen Strömungsdurchlass (4) geleitet wird, und ein zu kühlendes Fluid B durch den anderen Strömungsdurchlass (5) geleitet wird, so dass der Gasstrom Aa merkliche Wärme des Fluids B abführt, während der Gasstrom Aa durch einen Strömungsdurchlass (4) des Wärmetauschers hindurchtritt, so dass eine große Menge an winzigen Flüssigkeitstropfen M, die in dem Gasstrom Aa aufschwimmen, verdampft wird, und die Temperatur des Gasstroms Aa durch die Verdampfungswärme kontinuierlich abnimmt, um das Fluid B kontinuierlich zu kühlen, **dadurch gekennzeichnet, dass** der Durchmesser jedes Tropfens der flüchtigen Flüssigkeit nicht größer als 280 µm ist.

14. Vorrichtung zum Kühlen eines Fluids in Übereinstimmung mit Anspruch 13, wobei eine Einrichtung (7) zum Einleiten von flüchtigem Flüssigkeitsdampf stromaufwärts von einer Nebelbildungseinrichtung (6) für flüchtige Flüssigkeit vorgesehen ist.

15. Vorrichtung Kühlen eines Fluids in Übereinstimmung mit Anspruch 13, wobei ein Kanal (8d, 8e) und ein Gebläse (Fc) vorgesehen sind, die einen Gasstrom Ab, der aus einem Auslass (4b) des Wärmetauschers (3) ausgetragen wird, zu der Einlassseite (4a) des Wärmetauschers (3) leitet, um einen Gasstrom Aa zur Abkühlung umzuwälzen.

16. Vorrichtung zum Kühlen eines Fluids nach einem der Ansprüche 13 bis 15, wobei ein Wärmetauscher (3) ein Querstrom-Wärmetauscher, ein Diagonal-Querstrom-Wärmetauscher, ein Gegenstrom-Wärmetauscher oder ein Gegenstrom-/Querstrom-Kombinations-Wärmetauscher ist, der aus einem Honigwabenlaminat besteht, das durch Laminierung flacher Bleche und gewellter Bleche in abwechselnder Weise gebildet ist.

17. Vorrichtung zum Kühlen eines Fluids nach einem der Ansprüche 13 bis 15, wobei ein Wärmetauscher (3) ein Querstrom-Wärmetauscher, ein Diagonal-Querstrom-Wärmetauscher, ein Gegenstrom-Wärmetauscher oder ein Gegenstrom/Querstrom-Kombinations-Wärmetauscher ist, der durch Laminieren von Flächen mit zahlreichen Abstandhalter zwischen den Flächen gebildet ist.

18. Vorrichtung zum Kühlen eines Fluids nach einem der Ansprüche 13 bis 17, wobei die Oberfläche des Wärmetauschelements (1, 2) hydrophil ist.

19. Vorrichtung zum Kühlen eines Fluids nach Anspruch 16 oder 17, wobei winzige Partikel auf der Wandfläche eines Strömungsdurchlasses (4, 5) eines Wärmetauschers (3) fest haften.

20. Vorrichtung zum Kühlen eines Fluids nach Anspruch 19, wobei die winzigen Partikel ein Adsorptionsmittel sind.

21. Vorrichtung zum Kühlen eines Fluids nach einem der Ansprüche 13 bis 15, wobei die Vorrichtung außerdem einen Trockenmittelentfeuchter (14) zum Entfeuchten von Fluid B umfasst, bevor oder nachdem das Fluid durch den Wärmetauscher (3) geleitet wird.

22. Vorrichtung zum Kühlen eines Fluids nach Anspruch 21, wobei die Entfeuchtungseinrichtung (14) in der stromaufwärtigen Seite des Hochtemperaturgasstroms B in den Wärmetauscher (3) vorgesehen ist.

23. Vorrichtung zum Kühlen eines Fluids nach Anspruch 21, wobei die Entfeuchtungseinrichtung (14) in der stromabwärtigen Seite des Hochtemperaturgasstroms B in den Wärmetauscher (3) vorgesehen ist.

24. Vorrichtung zum Kühlen eines Fluids nach Anspruch 21, wobei es sich bei dem Fluid B um ein Gas handelt, und wobei zwei Gasströme Aa vorgesehen sind, und wobei zwei Wärmetauscher (3a, 3b) mit mehreren Strömungsdurchlässen (4, 5) vorgesehen sind, wobei der eine Gasstrom Aa durch einen Strömungsdurchlass (4) von jedem der zwei Wärmetauscher (3a, 3b) geleitet wird, und wobei der Gasstrom B auf einander folgend durch den anderen Strömungsdurchlass (5) des ersten Wärmetauschers (3a), die Entfeuchtungseinrichtung (14) und den anderen Strömungsdurchlass (5) des zweiten Wärmetauschers (3b) geleitet wird.

25. Vorrichtung zum Kühlen eines Fluids nach einem der Ansprüche 21 bis 24, wobei die Entfeuchtungseinrichtung (14) ein Rotationsentfeuchter ist.

26. Vorrichtung zum Kühlen eines Fluids nach Anspruch 25, wobei die Entfeuchtungseinrichtung ein Trockenmittelentfeuchter ist.

27. Vorrichtung zum Kühlen eines Fluids nach Anspruch 13, aufweisend einen Wärmetauscher (19), dem eine Abwärmequelle (20) einer Gefriereinrichtung (18) zugeordnet ist, wobei das Fluid B, sobald es abgekühlt ist, in den Wärmetauscher (19) geleitet wird, um mit der Wärmetauschquelle (20) Wärme zu tauschen.

28. Vorrichtung zum Kühlen eines Fluids nach Anspruch 27, wobei das Fluid B aus der Gruppe ausgewählt ist, die aus Wasser und einem Wasser enthaltenden Flüssigkeitsgemisch besteht.

29. Vorrichtung zum Kühlen eines Fluids nach einem der Ansprüche 13 bis 28, wobei es sich bei dem Fluid B um ein Gas handelt.

## Revendications

1. Procédé de refroidissement de fluide dans lequel un flux de gaz A est transformé en gaz Aa qui est saturé d'une vapeur de liquide volatil et dans lequel flotte une grande quantité de gouttelettes de liquide sous forme de brouillard M dudit liquide volatil, et dans lequel ledit flux de gaz Aa passe à travers un passage d'écoulement (4) d'un échangeur thermique (3) ayant une pluralité de passages de flux (4, 5) à partir d'une position située au-dessus dudit échangeur thermique (3), et le fluide B à refroidir passe à travers l'autre passage d'écoulement (5) dudit échangeur thermique (3), de sorte que la chaleur sensible du fluide B soit donnée au flux de gaz Aa tandis que le flux de gaz Aa passe à travers un passage d'écoulement (4) de l'échangeur thermique (3) pour élever la température du flux de gaz Aa, de sorte qu'une grande quantité de gouttelettes de liquide M flottant dans le flux de gaz Aa est vaporisée, et que la température du flux de gaz Aa soit continuellement abaissée par la chaleur de vaporisation des gouttes de liquide pour refroidir de manière continue le fluide B à travers l'échange thermique sensible entre le flux de gaz Aa et le fluide B, **caractérisé en ce que** le diamètre de chaque goutte du liquide volatil est inférieur ou égal à 280 μm.

2.  Procédé de refroidissement d'un fluide selon la revendication 1, dans lequel la quantité de gouttelettes de liquide M flottant dans le flux de gaz Aa est modifiée en fonction du changement de la différence de température entre le flux de gaz Aa et le fluide B.

3.  Procédé de refroidissement de fluide selon la revendication 1, dans lequel la vitesse d'écoulement du flux de gaz Aa, dans lequel flottent des gouttelettes de liquide M, est modifiée en fonction du changement de la différence de température entre le flux de gaz Aa et le fluide B.

4.  Procédé de refroidissement d'un fluide selon l'une quelconque des revendications 1 à 3, dans lequel le flux de gaz A est transformé en un flux de gaz saturé de vapeur de liquide volatil et dans lequel du brouillard de liquide volatil est en outre ajouté audit flux de gaz pour le transformer en gaz Aa dans lequel flotte une grande quantité de gouttelettes de liquide M.

5.  Procédé de refroidissement de fluide selon l'une quelconque des revendications 1 à 4 , dans lequel un flux de gaz Ab contenant une grande quantité de vapeur de liquide volatil évacué par la sortie (4b) d'un passage d'écoulement (4) de l'échangeur thermique (3) est renvoyé du côté de l'entrée (4a) du même passage d'écoulement de l'échangeur thermique et dans lequel du brouillard d'un liquide volatil est ajouté audit flux de gaz pour transformer ledit flux de gaz en flux de gaz Aa dans lequel flotte des gouttelettes de liquide M, à utiliser en circulation.

6.  Procédé de refroidissement de fluide selon l'une quelconque des revendications 1 à 5, dans lequel le liquide volatil est de l'eau, un liquide organique volatil ou des liquides mélangés de liquide organique volatil et d'eau.

7.  Procédé de refroidissement de fluide selon l'une quelconque des revendications 1 à 6, dans lequel du liquide volatil est vaporisé par une tuyère du type à mélange gaz/liquide (6).

8.  Procédé de refroidissement de fluide selon l'une quelconque des revendications 1 à 7 , dans lequel le fluide B est un gaz.

9.  Procédé de refroidissement de fluide selon l'une quelconque des revendications 1 à 8, dans lequel le fluide B est déshuraidifié par des moyens de déshumidification (14) avant et après être passé à travers ledit échangeur thermique (3).

10. Procédé de refroidissement de fluide selon la revendication 9, dans lequel le fluide B est un gaz, et où sont présents deux flux de gaz Aa, et dans lequel l'un des flux de gaz Aa est envoyé dans un passage d'écoulement (4) de chacun des deux échangeurs thermiques (3a, 3b) et le flux de gaz B passe dans l'ordre à travers l'autre passage d'écoulement (5) du premier échangeur thermique (3a), les moyens de déshumidification (14) et l'autre passage d'écoulement (5) du second échangeur thermique (3b).

11. Procédé de refroidissement de fluide selon la revendication 9 ou la revendication 10, dans lequel les moyens de déshumidification (14) sont un déshumidificateur rotatif.

12. Procédé de refroidissement de fluide selon l'une quelconque des revendications 9 à 11, dans lequel les moyens de déshumidification sont un déshumidificateur à dessicant.

13. Dispositif pour le refroidissement de fluide comprenant des moyens de formation de brouillard (6) pour ajouter du liquide volatil à un flux de gaz A pour le transformer en flux de gaz Aa qui est saturé d'une vapeur de liquide volatil et dans lequel flotte une grande quantité de gouttelettes de brouillard M dudit liquide volatil et un échangeur thermique (3) ayant une pluralité de passages d'écoulement (4, 5), le flux de gaz Aa d'une position située au-dessus dudit échangeur thermique (3), à travers un passage d'écoulement (4) et le fluide B à refroidir passant à travers l'autre passage d'écoulement (5), de sorte que le flux de gaz Aa enlève de la chaleur sensible du fluide B tandis que le flux de gaz Aa passe à travers un passage d'écoulement (4) de l'échangeur thermique de sorte qu'une grande quantité de gouttelettes de liquide M flottant dans le flux de gaz Aa est vaporisée, et que la température du flux de gaz Aa diminue en continu par la chaleur de vaporisation pour refroidir de manière continue le fluide B, **caractérisé en ce que** le diamètre de chaque goutte du liquide volatil est inférieure ou égale à 280 μm.

14. Dispositif pour le refroidissement de fluide selon la revendication 13, dans lequel des moyens (7) pour introduire de la vapeur de liquide volatil sont prévus en amont de moyens de formation de brouillard (6) pour liquide volatil.

15. Dispositif pour le refroidissement de fluide selon la revendication 13, dans lequel sont prévus un conduit (8d, 8e) et un ventilateur (Fc) qui mènent un flux de gaz Ab évacué par une sortie (4b) d'un échangeur thermique (3) vers le côté d'entrée (4a) de l'échangeur thermique (3) pour faire circuler un flux de gaz Aa dans un but de refroidissement.

16. Dispositif pour le refroidissement de fluide selon l'une quelconque des revendications 13 à 15, dans lequel un échangeur thermique (3) est du type à flux croisé, à flux croisé diagonal, ou à flux inverse/croisé combiné, constitué d'un stratifié en nid d'abeilles formé en laminant des feuilles planes et des feuilles ondulées de manière alternée.

17. Dispositif pour le refroidissement de fluide selon l'une quelconque des revendications 13 à 15, dans lequel un échangeur thermique (3) est du type à flux croisé, à flux croisé diagonal, à flux inverse ou à flux inverse/croisé combiné formé par des feuilles laminées avec de nombreux dispositifs d'espacement entre elles.

18. Dispositif pour le refroidissement de fluide selon l'une quelconque des revendications 13 à 17, dans lequel la surface de l'élément d'échange thermique (1, 2) est hydrophile.

19. Dispositif pour le refroidissement de fluide selon la revendication 16 ou la revendication 17, dans lequel des particules minuscules adhèrent de façon rigide sur la surface de paroi d'un passage d'écoulement (4, 5) d'un échangeur thermique (3),

20. Dispositif pour le refroidissement de fluide selon la revendication 19, dans lequel des particules minuscules sont des particules d'adsorbant.

21. Dispositif pour le refroidissement de fluide selon l'une quelconque des revendications 13 à 15, dans lequel le dispositif comprend en outre un déshumidificateur à dessicant (14) pour déshumidifier le fluide B avant ou après que ledit fluide passe à travers ledit échangeur thermique (3).

22. Dispositif pour le refroidissement de fluide selon la revendication 21, dans lequel les moyens de déshumidification (14) sont prévus du côté en amont du flux de gaz à haute température B dans l'échangeur thermique (3).

23. Dispositif pour le refroidissement de fluide selon la revendication 21, dans lequel les moyens de déshumidification (14) sont prévus du côté en aval du flux de gaz à haute température B dans l'échangeur thermique (3).

24. Dispositif pour le refroidissement de fluide selon la revendication 21, dans lequel le fluide B est un gaz, et où sont présents deux flux de gaz Aa, et dans lequel on trouve deux échangeurs thermiques (3a, 3b) ayant une pluralité de passages d'écoulement (4, 5), l'un des flux de gaz Aa passant à travers un passage d'écoulement (4) de chacun des deux échangeurs thermiques (3a, 3b) et le flux de gaz B passant dans l'ordre à travers l'autre passage d'écoulement (5) du premier échangeur thermique (3a), les moyens de déshumidification (14) et l'autre passage d'écoulement (5) du second échangeur thermique (3b).

25. Dispositif pour le refroidissement de fluide selon l'une quelconque des revendications 21 à 24, dans lequel les moyens de déshumidification (14) sont un déshumidificateur rotatif.

26. Dispositif pour le refroidissement de fluide selon la revendication 25, dans lequel les moyens de déshumidification sont un déshumidificateur à dessicant.

27. Dispositif pour le refroidissement de fluide selon la revendication 13, comprenant un échangeur thermique (19) ayant une source de chaleur d'évacuation (20) d'un congélateur (18) associée à celui-ci, le fluide B, une fois refroidi, passant dans l'échangeur thermique (19) pour échanger de la chaleur avec ladite source de chaleur d'évacuation (20).

28. Dispositif pour le refroidissement de fluide selon la revendication 27, dans lequel le fluide B est choisi dans le groupe constitué de l'eau et d'un mélange liquide contenant de l'eau.

29. Dispositif pour le refroidissement de fluide selon l'une quelconque des revendications 13 à 28, dans lequel le fluide B est un gaz.

FIG.1

FIG.2

FIG.3

25.9 °C
8.05 g/kg
RH 39 %

17.5 °C

2 m/s
A

SPRAY — 6

Aa · M

FIG.4

4
4a B

18.6 °C
10.44 g/kg
RH 78 %

SA

2 m/s

70.6 °C
10.44 g/kg
RH 5 %

5

5a

Ab

3

30.7 °C
RH 100 %

Fa

FIG.5

140
120
100 — Ab
80
60

Relative Humidity (%)

50

100

20

10

4

(kJ/kg)

0.02

40

20

0

20

Aa

SA

B

0.01

0

0

20

40

60

80

100

0

22.3°C
7.58 g/kg
RH 45 %

A  2m/s

FIG.6

36.0°C
11.34 g/kg
RH 31 %

Ba    B    2 m/s

67.2 °C
11.34 g/kg
RH 7 %

Ab

62.0 °C
7.58 g/kg
RH 6 %

FIG.7

Relative Humidity (%)

(kJ/kg)

Ba    B

A    Ab

FIG.8

25.7 °C
12.20 g/kg
RH 59 %

2 m/s

A

SPRAY          6

20.2 °C
RH 100 %

Aa          M

4
4a

20.6 °C
14.41 g/kg
RH 95 %

SA

B          2 m/s

5          5a          34.2 °C
14.41 g/kg
RH 43 %

Ab

25.0 °C
RH 100 %

FIG.9

140
120
100
80
60

100 50 20 10 4

Relative Humidity (%)

(kJ/kg)

0.02

Ab

SA

40

B

Aa

20

0

0.01

0

0          20          40          60          80          100          0

FIG.10

3 m/s

A   25.9°C
    11.34 g/kg

6 — SPRAY

M { Aa   14.6°C
          RH 100%

SA ←

17.2 °C
12.12 g/kg
RH98.7%

3

B ← 2m/s

51.3°C
17.30g/kg
RH 20.8%

Ab   24.0°C
     RH 100%

FIG.11

Relative Humidity (%)

140
120
100
80
60
100
50
20
10
4

(kJ/kg)

0.02

Ab

B

40

SA

A

Aa

0.01

20

0

0   20   40   60   80   100   0

FIG.12

FIG.13

FIG.14

FIG.15

RA

OA

A

SPRAY 6

H

M

RA

Aa

EA

4a

17

1

15

4

2

5a

15

SA

HA

16

5b

14

5

3

OA

4b

Fb

B

Ab

OA

EA

**FIG.16**

FIG.17

FIG.18

FIG.19

FIG.20

FIG.21